# EUROPEAN PATENT APPLICATION

(11) **EP 2 323 206 A1**
(43) Date of publication of application: **18.05.2011**
(21) Application number: 09812828.3
(22) Date of filing: 21.07.2009
(51) Int. Cl.: H01M 6/06, H01M 4/06, H01M 4/42

(54) **MERCURY-FREE ALKALINE DRY BATTERY**

(30) Priority: 12.09.2008 JP 2008235323
(71) Applicant: Panasonic Corporation, Kadoma-shi Osaka 571-8501 (JP)
(72) Inventor: SHIMAMURA, Harunari, Osaka 540-6207 (JP); NUNOME, Jun, Osaka 540-6207 (JP); KATO, Fumio, Osaka 540-6207 (JP)
(74) Representative: Grünecker, Kinkeldey, Stockmair & Schwanhäusser Anwaltssozietät
(86) International application number: PCT/JP2009/003406
(87) International publication number: WO 2010/029679

(57) **Abstract**

The present invention provides a mercury-free alkaline dry battery which is improved in discharge characteristic at low cost. The mercury-free alkaline dry battery includes: a positive electrode; a negative electrode; and a separator, wherein a negative electrode active material contains short fibrous zinc particles, and each of the short fibrous zinc particles has a length of 1 mm to 50 mm, both inclusive, a major diameter of 2 µm to 1 mm, both inclusive, and a specific surface area of 50 cm²/g to 1000 cm²/g, both inclusive.

## Description

### TECHNICAL FIELD

The present invention relates to mercury-free dry batteries.

### BACKGROUND ART

Alkali-manganese dry batteries including manganese dioxide as a positive electrode, zinc as a negative electrode, and an alkaline solution as an electrolyte have widely been used as power sources of various devices for their versatility and inexpensiveness.

In an alkaline dry battery, zinc powder of indefinite shape obtained by gas atomization etc. is used as a negative electrode active material. According to the conventional technology, mercury is added to the negative electrode to form amalgam on the surfaces of zinc powder particles, thereby ensuring contact among the zinc powder particles, and contact between the zinc powder particles and a current collector, and increasing efficiency of current collection. For example, Patent Document 5 teaches a battery including a negative electrode active material provided by adding mercury to needle-shaped zinc formed by electrolysis, instead of the zinc powder. However, in view of environmental friendliness, mercury-free alkaline dry batteries replaced the mercury-containing alkaline dry batteries in the 1980-1990's. This reduced resistance to corrosion, and a discharge characteristic of the alkaline dry batteries.

The problem of the resistance to corrosion has been solved by, for example, a technology of using highly corrosion-resistant zinc alloy powder containing a small amount of indium, aluminum, bismuth, etc., as taught by Patent Document 1.

To improve the discharge characteristic, as taught by Patent Documents 2-4, zinc ribbons or zinc fibers have been used as the negative electrode active material. According to a technology of Patent Document 2, zinc fibers and zinc particles are fixed with an adhesive to provide a negative electrode. According to the technology of Patent Document 3, zinc fibers are united and twined (like cotton wool) to provide a porous solid zinc electrode. According to a technology of Patent Document 4, zinc ribbons are used as the negative electrode active material. These electrodes are porous, and contain the zinc particles fixed to each other like the negative electrode of the mercury-containing battery in which the zinc powder particles or needle-shaped zinc particles are fixed by amalgam. Therefore, an aqueous KOH solution is used as an electrolyte instead of a gelled electrolyte which is generally used in the commercially available alkaline dry batteries. In the commercially available alkaline dry batteries, the gelled electrolyte is used to prevent precipitation of the zinc powder particles, and separation of the zinc powder particles from the electrolyte in the absence of mercury. However, an aggregate of the zinc powder particles which does not sufficiently contact with the adjacent zinc powder particles, and the current collector in the gelled electrolyte does not react sufficiently, and is not utilized as the negative electrode active material. This phenomenon does not occur according to the technologies described in Patent Documents 2-4.

### CITATION LIST

### PATENT DOCUMENTS

[Patent Document 1] Japanese Published Examined Application No. H03-71737
[Patent Document 2] Japanese Translation of PCT International Application No. 2008-516410
[Patent Document 3] Japanese Translation of PCT International Application No. 2008-518408
[Patent Document 4] Japanese Translation of PCT International Application No. 2002-531923
[Patent Document 5] U.S. Patent No. 3853625

### SUMMARY OF THE INVENTION

### TECHNICAL PROBLEM

The negative electrodes described in Patent Documents 2-4 are completely different from the negative electrodes of the commercially available alkaline dry batteries. Therefore, new production process and facility have to be developed to produce such negative electrodes, thereby increasing production cost. According to the technology of Patent Document 2, the negative electrode is a structure including the zinc particles and the zinc fibers fixed with an adhesive. When a local stress is applied to the negative electrode structure as the positive electrode expands due to discharge, the negative electrode structure may break due to concentration of the stress, and an electron conductive network may break. According to the technology of Patent Document 3, the united and twined zinc fibers are compressed to form the negative electrode. In this method, it is difficult to obtain a uniform porous structure, and the electron conductive network, and diffusion of the electrolyte may not be uniform, thereby reducing a utilization ratio of the negative electrode. According to the technology of Patent Document 4, the negative electrode is made of the zinc ribbons. Therefore, gaps between the zinc ribbons in the negative electrode lack continuity, thereby inhibiting the diffusion of the electrolyte, and reducing the utilization of the negative electrode.

In view of the foregoing, the present invention has been achieved. An object of the invention is to provide a mercury-free alkaline dry battery which is improved in discharge characteristic at low cost.

### SOLUTION TO THE PROBLEM

To achieve the object, a mercury-free alkaline dry battery of the present invention includes: a positive electrode; a negative electrode; and a separator, wherein the negative electrode contains short fibrous zinc particles as a negative electrode active material, and a gelled alkaline electrolyte as a dispersion medium, and each of the short fibrous zinc particles has a length of 1 mm to 50 mm, both inclusive, a major diameter of a cross section of 2 µm to 1 mm, both inclusive, and a specific surface area of 50 cm²/g to 1000 cm²/g, both inclusive. A length of the short fibrous zinc particle is preferably twice or more greater than the major diameter of the cross section.

The negative electrode may not contain an adhesive for bonding the short fibrous zinc particles as the negative electrode active material. The adhesive is a substance which bonds and fixes the negative electrode active material particles in the dry battery, and keeps the bonding of the negative electrode active material particles. The adhesive may be, for example, polyvinyl alcohol.

In a certain embodiment, a major diameter and a minor diameter of the cross section has a relation of 0.1 ≤ minor diameter/major diameter ≤ 1.

In a certain embodiment, the short fibrous zinc particle has a grain size of 1 µm to 50 µm, both inclusive.

In a certain embodiment, the negative electrode further includes zinc particles having a maximum diameter of 500 µm or smaller as the negative electrode active material, and the content of the short fibrous zinc particles is 2% by mass to 80% by mass, both inclusive, relative to the total negative electrode active material. The major diameter and the minor diameter of the cross section preferably have a relation of 0.15 ≤ minor diameter/major diameter ≤ 1, and the maximum diameter of the zinc particles is 250 µm or smaller.

In a certain embodiment, the negative electrode has a density of 2.3 g/cm³ to 3.8 g/cm³, both inclusive.

In a certain embodiment, at least one substance selected from the group consisting of Al, Bi, In, Ca, and Mg is added to the short fibrous zinc particles.

In a certain embodiment, at least one substance selected from the group consisting of Al, Bi, In, Ca, and Mg is added to the short fibrous zinc particles and the zinc particles.

### ADVANTAGES OF THE INVENTION

The mercury-free alkaline dry battery of the present invention includes the short fibrous zinc particles having a length of 1 mm to 50 mm, both inclusive, a major diameter of a cross section of 2 µm to 1 mm, both inclusive, and a specific surface area of 50 cm²/g to 1000 cm²/g, both inclusive, as the negative electrode active material. The short fibrous zinc particles provide an electron conductive network densely in the gelled alkaline electrolyte. Thus, the obtained dry battery shows a high discharge characteristic. Further, a conventional process for manufacturing the dry batteries can be used without any change, thereby reducing manufacturing cost.

### BRIEF DESCRIPTION OF THE DRAWINGS

[FIG. 1] FIG. 1(a) shows a roll used in a melt spinning method, and FIG. 1(b) is an enlarged view of a groove formed in the roll.
[FIG. 2] FIG. 2 a table indicating properties of manufactured zinc granules.
[FIG. 3] FIG. 3 shows a table indicating the results of evaluation of Examples 1-10, and Comparative Examples 1-19.
[FIG. 4] FIG. 4 shows a table indicating the results of evaluation of Examples 11-17.
[FIG. 5] FIG. 5 shows a table indicating the results of evaluation of Examples 18-28.
[FIG. 6] FIG. 6 shows a table indicating the results of evaluation of Examples 29-36.
[FIG. 7] FIG. 7 shows a table indicating the results of evaluation of Examples 37-43.
[FIG. 8] FIG. 8 shows a table indicating the results of evaluation of Examples 44-52.
[FIG. 9] FIG. 9 shows an alkaline dry battery of an embodiment, partially broken.

### DESCRIPTION OF EMBODIMENTS

Zinc granules used as a negative electrode of a mercury-free alkaline dry battery will be described. The zinc granules are small bits or pieces of zinc of any shape which have a maximum diameter of about several µm to 10 mm, and are used as a negative electrode active material. The zinc granules include the short fibrous zinc particles, and the zinc fine particles described above. In this specification, zinc includes a zinc alloy containing a small amount of metal except for zinc (except for mercury).

The zinc granules filled in a commercially available conventional alkaline dry battery are a powdery material manufactured by gas atomization. The zinc granules have an indefinite shape like a potato, and are classified by a mesh to have an average particle diameter of around 180 µm. For example, zinc powder manufactured by MITSUI MINING & SMELTING CO., LTD. (lot No. 70SA-H, containing Al 50 ppm, Bi 50 ppm, and In 200 ppm) may be used.

In the following embodiment, the short fibrous zinc particles are manufactured by a melt spinning method. The melt spinning method is a method for spraying/dropping molten metal on a rotating single roll, and blowing the molten metal by centrifugal force to form granules of metal. Metals of various shapes including strip-shaped metal, powders, etc., can be formed by adjusting the spraying amount of the molten metal, or the number of revolutions of the roll. The method for forming the short fibrous zinc particles of the present application is not limited to the melt spinning method. The short fibrous zinc particles may be formed by cutting, etc.

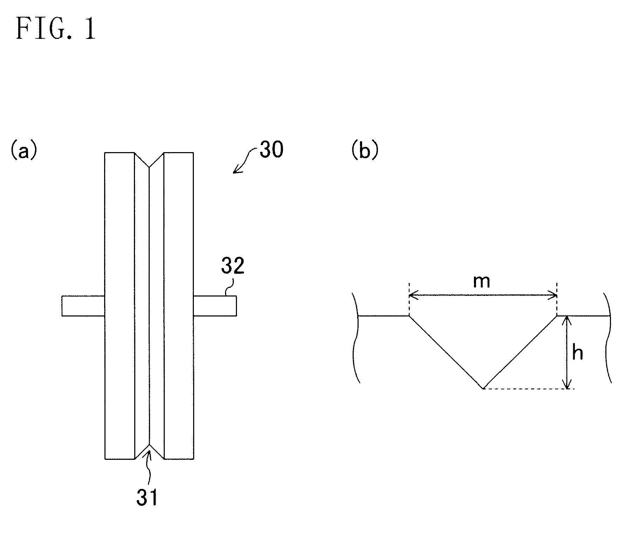

The short fibrous zinc particle can be manufactured by using a general cylindrical or disc-shaped roll, but can also be manufactured by using a roll 30 shown in FIG. 1. In this case, a groove 31 is formed in a circumferential surface which is the farthest from a rotation shaft 32, and the molten metal is sprayed to the groove 31, thereby forming the short fibrous zinc particle 21 having a large value of minor diameter/major diameter of a cross section of the short fibrous zinc particle perpendicular to a long axis direction. The value of minor diameter/major diameter depends on a width m and a depth h of the groove 31. The cross sectional shape of the groove 31 is not limited to the triangular shape, and may be rectangular, or U-shaped.

### (Embodiment)

### -Manufacture of Zinc Granules-

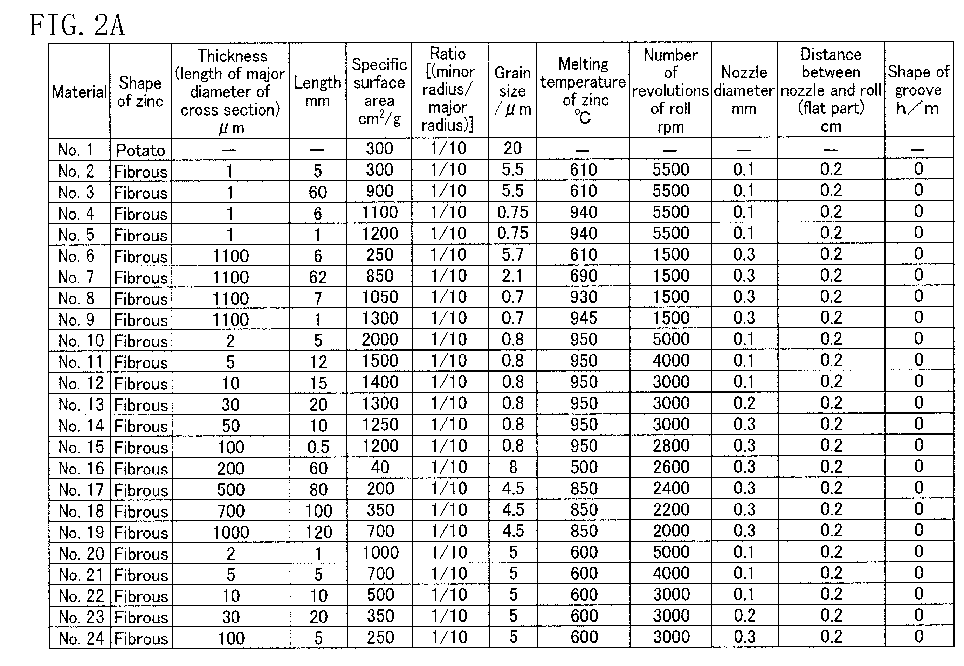

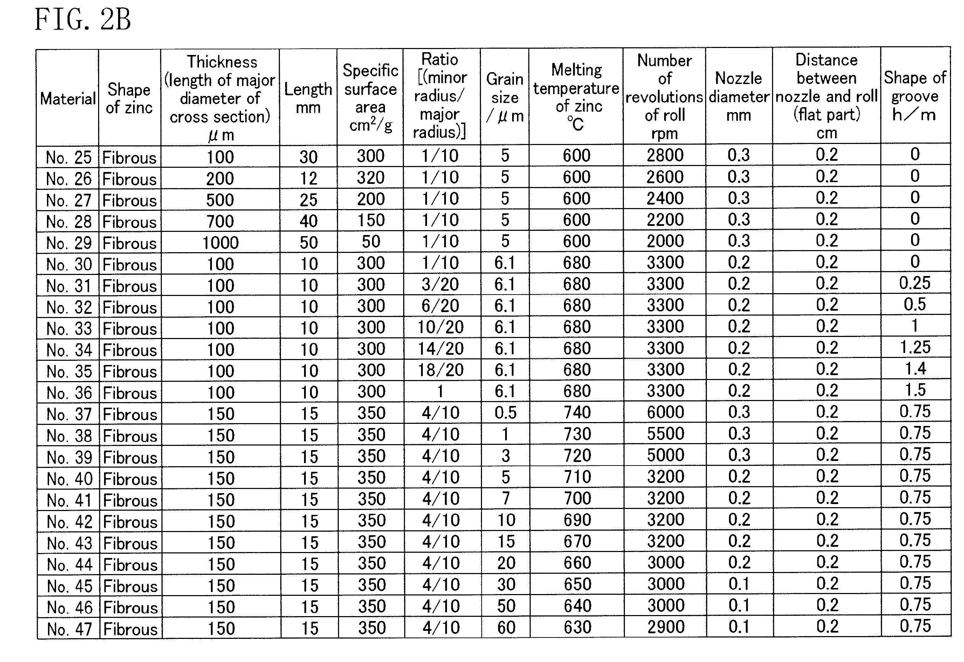

To manufacture alkaline dry batteries, zinc granules of various shapes were manufactured by the melt spinning method using the zinc powder manufactured by MITSUI MINING & SMELTING CO., LTD. FIG. 2 shows a table indicating manufacturing conditions, shape, and properties of the obtained zinc granules. A nozzle was used to spray the heated zinc powder to the roll. When the groove shape h/m was zero, a flat roll having no groove was used. The obtained zinc granules did not have a uniform shape even when they were manufactured under the same manufacturing condition. Therefore, the table indicates an average shape of the zinc granules of the largest number obtained under the corresponding manufacturing condition. Zinc granules which are potato-shaped (No. 1) are raw zinc powder particles.

### -Measurement of Specific Surface Area-

A specific surface area of the zinc granules was measured by a gas adsorption method. A measurement apparatus ASAP-2010 manufactured by Shimadzu Corporation was used. About 7 g of the zinc granules was placed in a measurement cell, and vacuum degassing was performed at 120°C for 2 hours. Then, a gas adsorption amount was measured by using Kr as an adsorption gas, and the gas adsorption amount was converted to the specific surface area.

### -Measurement of Grain Size-

A grain size of the zinc granules was measured on a microscope photograph. Specifically, an enlarged photograph of a surface or a cross section of the obtained zinc granule was taken using a light microscope or an electron microscope, and the grain size was measured on the photograph. Magnification of the microscope was adjusted in such a manner that a single photograph showed several tens of regions surrounded by grain boundaries. Two or more lines were arbitrarily drawn on the microscope photograph, and one of the lines which includes points of intersection with ten or more grain boundaries was selected. Then, a distance from a point of intersection of the line and the first grain boundary among the ten continuous grain boundaries, to a point of intersection of the line and the tenth grain boundary was measured, and the measured value was divided by 9 to obtain value r. Additional two lines were selected, and the values r were obtained in the same manner to obtain an average value of the three values r as a grain size of the zinc granule.

### -Description of Alkaline Dry Battery-

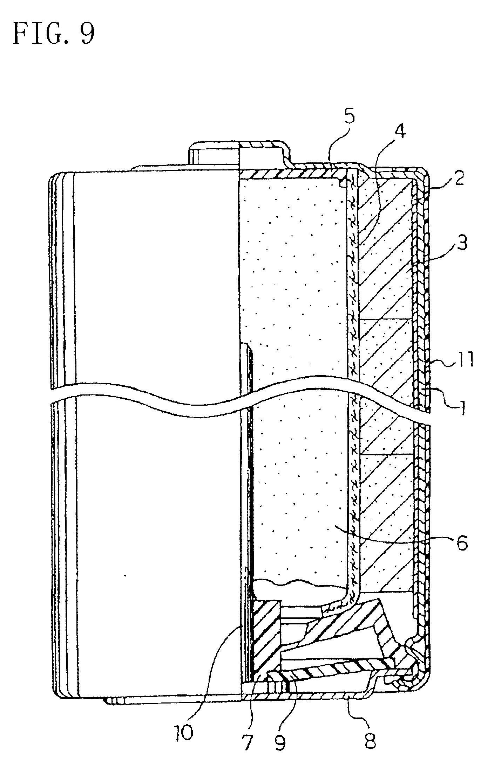

A mercury-free alkaline dry battery, which is an embodiment of the present invention, will be described below. As shown in FIG. 9, the mercury-free alkaline dry battery includes a positive electrode material mixture pellet 3, and a gelled negative electrode 6. The positive electrode material mixture pellet 3 and the gelled negative electrode 6 are isolated from each other by a separator 4. A positive electrode case 1 is made of a nickel-plated steel sheet. A graphite-coated film 2 is formed inside the positive electrode case 1.

The mercury-free alkaline dry battery shown in FIG. 9 can be manufactured in the following manner. Specifically, a plurality of positive electrode material mixture pellets 3, each of which contains a positive electrode active material such as manganese dioxide etc., and is in the shape of a hollow cylinder, are inserted in the positive electrode case 1, and are pressed to bring the positive electrode material mixture pellets into close contact with an inner surface of the positive electrode case 1.

The separator 4 wound in the shape of a cylinder, and an insulating cap 5 are inserted inside the positive electrode material mixture pellets 3, and then an electrolyte is injected to wet the separator 4 and the positive electrode material mixture pellets 3.

After the injection, the gelled negative electrode 6 is filled inside the separator 4. The gelled negative electrode 6 is manufactured in advance by mixing and dispersing zinc granules as a negative electrode active material in a gelled alkaline electrolyte (a dispersion medium). The zinc granules are manufactured as described above. An anionic surfactant, and a quaternary ammonium salt cationic surfactant are added to the alkaline electrolyte of the gelled negative electrode, and an indium compound is added as needed.

Then, a negative electrode current collector 10 integrated with a resin sealing plate 7, a bottom plate 8 which also functions as a negative electrode terminal, and an insulating washer 9 is inserted in the gelled negative electrode 6. Th en, an opening end of the positive electrode case 1 is clamped onto an edge of the bottom plate 8 with an end of the sealing plate 7 interposed therebetween to bring the opening of the positive electrode case 1 into close contact with the bottom plate 8.

Then, an outer label 11 is applied to an outer surface of the positive electrode case 1. Thus, a mercury-free alkaline dry battery of the present embodiment is obtained.

### -Evaluation of Zinc Granules-

In the following examples, the zinc granules as the negative electrode active materials in the mercury-free alkaline dry batteries manufactured as described above were inspected. The following examples are set forth for the purposes of preferred examples in nature, and the present invention is not limited to these examples.

### <Examples 1-10, Comparative Examples 1-19>

A gelled negative electrode 6 was manufactured in the following manner.

Short fibrous zinc particles of Nos. 20-29 shown in FIG. 2 were used as the negative electrode active materials of Examples 1-10. Potato-shaped zinc granules of No. 1 were used as the negative electrode active material of Comparative Example 1, and short fibrous zinc particles of Nos. 2-19 were used as the negative electrode active materials of Comparative Examples 2-19. In the following examples, all the short fibrous zinc particles and zinc granules contained 0.005% by mass of Al, 0.005% by mass of Bi, and 0.020% by mass of In.

To 100 parts by weight (pbw) of the short fibrous zinc particles or zinc granules, 54 pbw of a 33 wt. % aqueous potassium hydroxide solution (containing 2 wt. % of ZnO), 0.7 pbw of crosslinked polyacrylic acid, and 1.4 pbw of crosslinked sodium polyacrylate were mixed as a gelled alkaline electrolyte and a dispersion medium, and 0.03 pbw of indium hydroxide (0.0197 pbw as metal indium) was added and mixed to form a mercury-free negative electrode.

Then, an AA mercury-free alkaline dry battery was manufactured.

A positive electrode was manufactured in the following manner. Electrolytic manganese dioxide and graphite were mixed in a weight ratio of 94:6, and 1 pbw of an electrolyte (a 39 wt. % aqueous potassium hydroxide solution containing 2 wt. % of ZnO) was mixed with 100 pbw of the obtained powder mixture. Then, the mixture was uniformly stirred and mixed by a mixer, and was granulated into particles of a certain size. The obtained particles were press-molded into a positive electrode material mixture pellet using a hollow cylindrical mold. The electrolytic manganese dioxide used was HH-TF manufactured by Tosoh Corporation, and the graphite used as SP-20 manufactured by Nippon Graphite Industries, ltd.

The positive electrode material mixture pellet obtained as described above was inserted in a positive electrode case to cover an inner wall surface of the positive electrode case, and a separator and a bottom plate were inserted. Vinylon-lyocell composite nonwoven fabric manufactured by Kuraray Co., Ltd. was used as the separator. Then, a 33 wt. % aqueous potassium hydroxide solution (containing 2 wt. % of ZnO) was injected inside the separator, the above-described negative electrode was filled, and the bottom plate was clamped. Thus, an AA alkaline dry battery was manufactured.

The dry batteries manufactured in this manner were evaluated under the following two discharge conditions.

Discharge condition (A): the batteries were discharged at a constant current of 100 mA, and a discharge capacity until a discharge voltage reached 0.9 V was evaluated. Temperature was 20°C. A so-called low rate discharge characteristic was determined under this condition.

Discharge condition (B): the batteries were discharged at a constant current of 1000 mA, and a discharge capacity until a discharge voltage reached 0.9 V was evaluated. Temperature was 20°C. A so-called high rate discharge characteristic was determined under this condition.

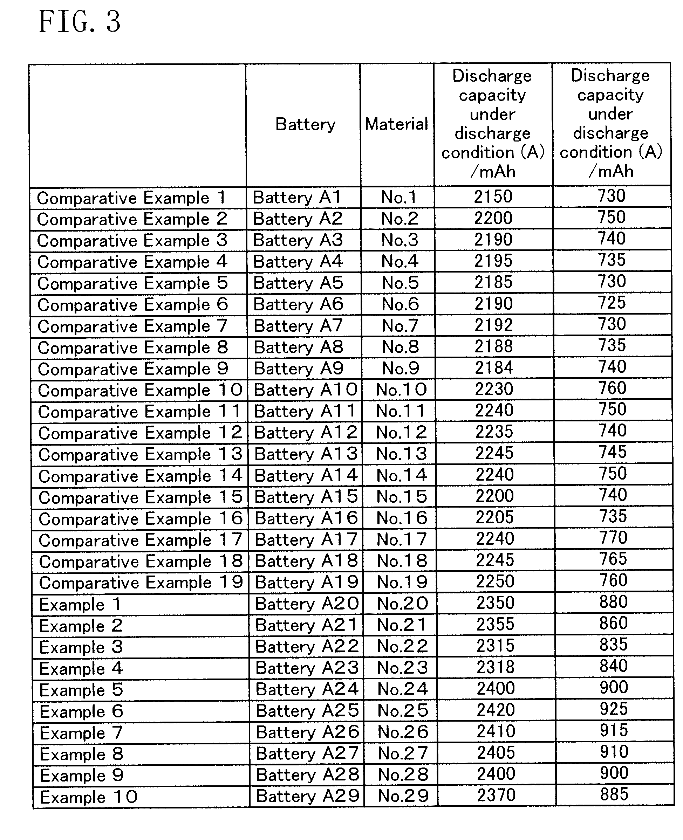

FIG. 3 shows the results of evaluation of Dry batteries Al-A29 of Comparative Examples 1-19 and Examples 1-10. In comparison between Dry battery Al of Comparative Example 1 using the potato-shaped zinc granules, and Dry batteries A2-A19 of Comparative Examples 2-19 using the short fibrous zinc particles, the discharge capacities under the discharge conditions (A), (B) of Dry batteries A2-A 19 were slightly higher than the discharge capacities of Dry battery A1, but the difference was not significant. This is presumably because the short fibrous zinc particles of Dry batteries A2-A5 had a major diameter of a cross section as small as 1 µm (Dry batteries A4 and A5 had a specific surface area larger than 1000 cm²/g), the short fibrous zinc particles of Dry batteries A6-A9 had a major diameter of a cross section as large as 1100 µm (Dry batteries A8 and A9 had a specific surface area larger than 1000 cm²/g), the short fibrous zinc particles of Dry batteries A10-A15 had a specific surface area larger than 1000 cm²/g (Dry battery A15 had a length as small as 0.5 mm), and the short fibrous zinc particles of Dry batteries A6-A9 had a length greater than 50 mm (Dry battery A16 had a specific surface area smaller than 50 cm²/g). In contrast, in Dry batteries A20-A29 of Examples 1-10, the short fibrous zinc particles had a length of 1 mm to 50 mm, both inclusive, a major diameter of a cross section of 2 µm to 1 mm, both inclusive, and a specific surface area of 50 cm²/g to 1000 cm²/g, both inclusive. Thus, the discharge capacities under the discharge conditions (A), (B) of Examples 1-10 were significantly high as compared with Comparative Examples 1-18.

The above-described results were presumably derived from electron conductivity among the zinc granules, and ease of diffusion of the electrolyte. Specifically, when the short fibrous zinc particles have a length of 1 mm to 50 mm, both inclusive, a major diameter of a cross section of 2 µm to 1 mm, both inclusive, and a specific surface area of 50 cm²/g to 1000 cm²/g, both inclusive, the short fibrous zinc particles are sufficiently entangled to contact with each other with increased frequency. Thus, an electron conductive network is provided densely by the short fibrous zinc particles, and as a result, isolated short fibrous zinc particles which are not electrically connected to the other short fibrous zinc particles hardly exist. This effect is significantly exerted in the presence of the gelled electrolyte. That is, when the short fibrous zinc particles are provided around gel parts in the electrolyte (small regions of gel), the short fibrous zinc particles are brought into tight contact. Further, the gelled parts are continuously present between the short fibrous zinc particles, thereby allowing easy diffusion of the electrolyte. When the electron conductive network is provided densely by the short fibrous zinc particles, reaction proceeds uniformly over time in every part of the aggregates of the short fibrous zinc particles. Therefore, there are almost no short fibrous zinc particles which are left unreacted, thereby increasing the discharge capacity. When the diffusion of the electrolyte is inhibited, a discharge voltage is reduced even if unreacted active material exists, and the discharge capacity is reduced. However, with use of the short fibrous zinc particles of Examples as the negative electrode active material, such a disadvantage can be avoided from occurring.

The dry battery of Comparative Example 1 can be considered as substantially the same battery as the conventional alkaline dry battery. The dry batteries of Examples 1-10 can be manufactured by the same method, the same process, and the same manufacturing apparatus as the dry battery of Comparative Example 1. Thus, a conventional manufacturing line can be used without any change, thereby reliably reducing the increase in manufacturing cost.

In the dry battery of Comparative Example 1, it was difficult to keep the zinc granules into contact with each other in every part of the aggregates of the zinc granules. Therefore, the electron conductivity among the zinc granules was low, many zinc granules were left isolated, and reaction of the isolated zinc granules were delayed.

### <Examples 11-17>

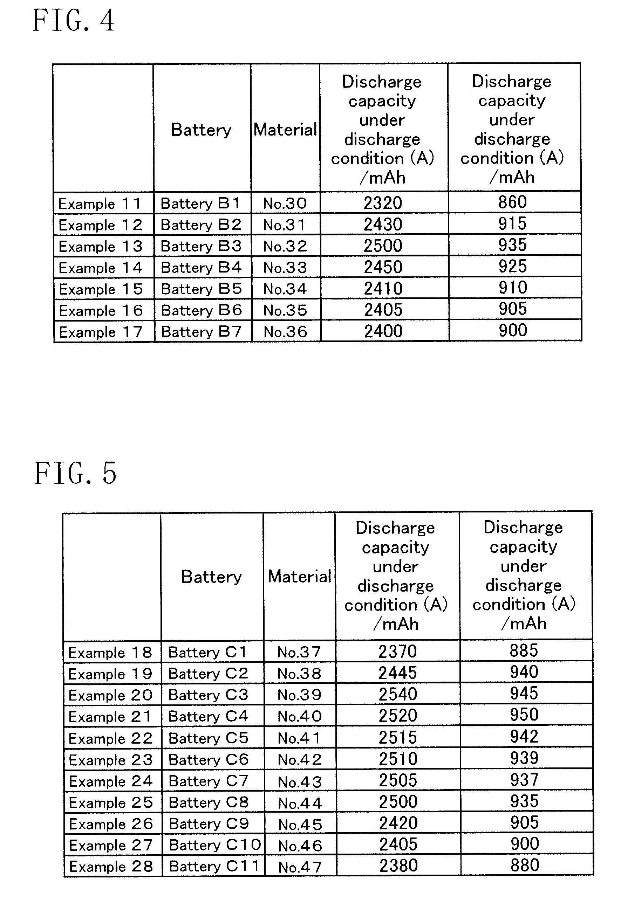

Dry batteries B1-B7 of Examples 11-17 shown in FIG. 4 were manufactured in the same manner as Example 1 except that short fibrous zinc particles of Nos. 30-36 shown in FIG. 2 were used as the negative electrode active materials. FIG. 4 shows the results of evaluation of the dry batteries under the discharge conditions (A), (B).

In the dry batteries of Examples 11-17, a value of minor diameter/major diameter of a cross section of the short fibrous zinc particle was sequentially varied from 0.1 to 1. The most preferable discharge characteristic was obtained when the value of minor diameter/major diameter was 0.3. The value of minor diameter/major diameter of the cross section was more preferably 0.15 to 1, both inclusive, because a better discharge characteristic was obtained. Improvement in discharge characteristic of the dry battery of Example 11 in which the value of minor diameter/major diameter of the cross section was 0.1 was practically sufficient as compared with the dry batteries of Comparative Examples.

### <Examples 18-28>

Dry batteries C1-C11 of Examples 18-28 shown in FIG. 5 were manufactured in the same manner as Example 1 except that short fibrous zinc particles of Nos. 37-47 shown in FIG. 2 were used as the negative electrode active materials. FIG. 5 shows the results of evaluation of the dry batteries under the discharge conditions (A), (B).

In the battery of Example 18, a grain size of the short fibrous zinc particles was 0.5 µm, which was slightly small, and the amount of gas generated from the grain boundaries was increased. Accordingly, the degree of improvement in discharge characteristic was not very high as compared with the batteries of Comparative Examples 1-19. In the battery of Example 28, the grain size of the short fibrous zinc particle was 60 µm, which was slightly large, and reactivity of zinc was slightly reduced. Accordingly, the degree of improvement in discharge characteristic was not very high as compared with the batteries of Comparative Examples 1-19. Therefore, the grain size of the short fibrous zinc particles is preferably 1 µm to 50 µm, both inclusive. The improvement in discharge characteristic of the dry batteries of Examples 18 and 28 was practically sufficient as compared with the dry batteries of Comparative Examples.

### <Examples 29-36>

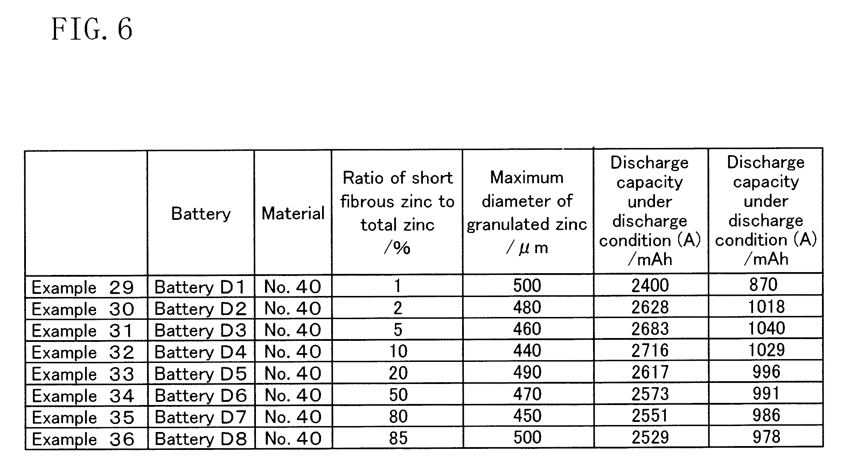

Dry batteries D1-D8 of Examples 29-36 shown in FIG. 6 were manufactured in the same manner as Example 1 except that short fibrous zinc particles of No. 40 shown in FIG. 2 were used as the negative electrode active materials, and that the potato-shaped zinc granules (granulated zinc) of No. 1 was also added as the negative electrode active material. The amount of the short fibrous zinc particles was varied relative to the total amount of the negative electrode active material (zinc) as shown in FIG. 6. FIG. 6 shows the results of evaluation of the dry batteries under the discharge conditions (A), (B).

Dry battery D 1 in which a mixing ratio of the short fibrous zinc particles was 2% by mass showed a good high rate discharge characteristic and a good low rate discharge characteristic as compared with the dry batteries of Comparative Examples 1-19, but the both discharge characteristics were slightly low as compared with Dry batteries D2-D7. Dry battery D8 in which the mixing ratio of the short fibrous zinc particles was 85% by mass showed a good high rate discharge characteristic and a good low rate discharge characteristic as compared with the dry batteries of Comparative Examples 1-19, but the both discharge characteristics were slightly low as compared with Dry batteries D2-D7. The results indicate that the amount of the short fibrous zinc particles which connect the negative electrode active materials was too small when the content of the short fibrous zinc particles relative to the total negative electrode material was lower than 2% by mass, and a sufficient electron conductive network was not provided. As a result, the discharge characteristic was not significantly improved. Further, when the content of the short fibrous zinc particles relative to the total negative electrode material was higher than 80% by mass, the diffusion of the electrolyte was not significantly improved, and the discharge characteristic was not greatly improved. Therefore, the mixing ratio of the short fibrous zinc particles relative to the total negative electrode active material is preferably 2% by mass to 80% by mass, both inclusive.

### <Examples 37-43>

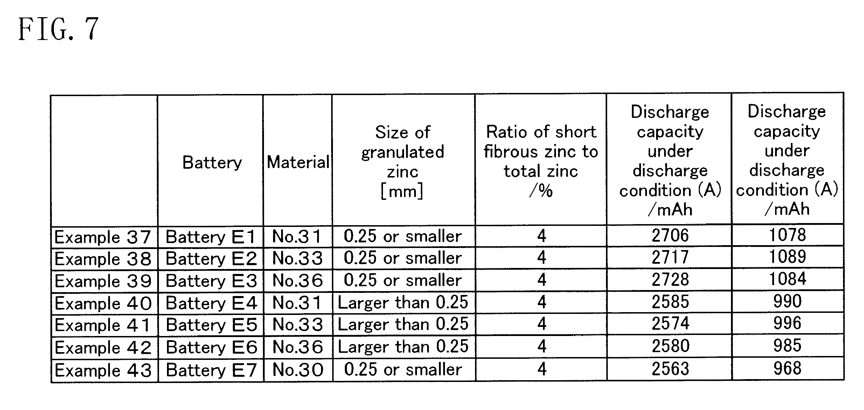

Dry batteries D1-D7 of Examples 37-43 shown in FIG. 7 were manufactured in the same manner as Example 1 except that short fibrous zinc particles of Nos. 30, 31, 33, and 36 shown in FIG. 2 were used as the negative electrode active materials, and that the potato-shaped zinc granules (granulated zinc) of No. 1 was also added as the negative electrode active material. The content of the short fibrous zinc particles relative to the total negative electrode active material (zinc) was 4% by mass. A size (a maximum diameter) of the granulated zinc was 0.25 mm or smaller, or larger than 0.25 mm. FIG. 7 shows the results of evaluation of the dry batteries under the discharge conditions (A), (B).

In comparison between Dry batteries E1 and E4, Dry batteries E2 and E5, and Dry batteries E3 and E6, the discharge characteristic was improved as compared with the dry batteries of Comparative Examples 1-19 when the maximum diameter of granulated zinc was larger than 0.25 mm, but the degree of improvement was low as compared with the dry batteries in which the maximum diameter of the granulated zinc was a 0.25 mm or smaller. It is presumed that when the maximum diameter of the granulated zinc is larger than 0.25 mm, the action of forming the electron conductive network densely, and the action of diffusing the electrolyte are not sufficient. Therefore, the maximum diameter of the granulated zinc to be mixed is preferably 0.25 mm or smaller. In comparison between Dry batteries E1-E3 and Dry battery E7, the discharge characteristic was significantly improved when the value of minor diameter/major diameter of the cross section of the short fibrous zinc particle was 0.15 or higher as compared with the case where the value of minor diameter/major diameter was 0.1.

### <Examples 44-52>

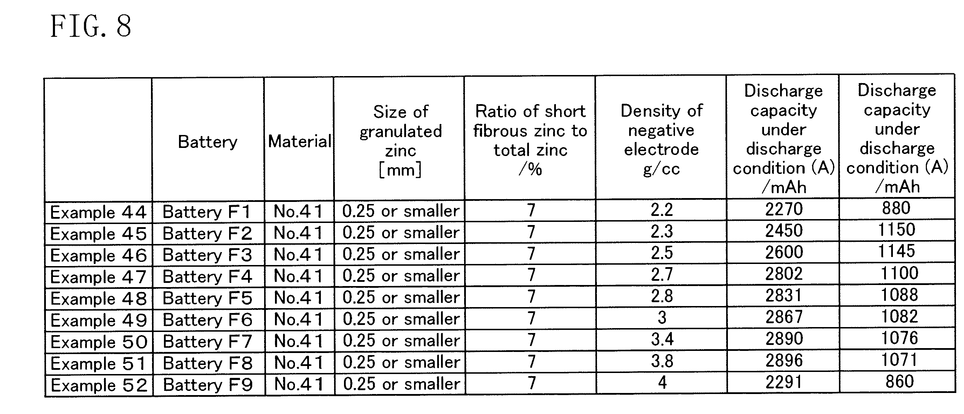

Dry batteries F1-F9 of Examples 44-52 shown in FIG. 8 were manufactured in the same manner as Example 1 except that short fibrous zinc particles of No. 41 shown in FIG. 2 were used as the negative electrode active materials, the potato-shaped zinc granules of No. 1 (granulated zinc having a maximum diameter of 0.25 mm or smaller) was added as the negative electrode active material, and the density of the negative electrode was varied by adjusting the filling amount of the negative electrode. The content of the short fibrous zinc particles relative to the total negative electrode active material (zinc) was 7% by mass. FIG. 8 shows the results of evaluation of the dry batteries under the discharge conditions (A), (B).

Dry batteries F 1 and F9 was improved in discharge characteristic as compared with the dry batteries of Comparative Examples 1-19, but the degree of improvement was low as compared with Dry batteries F2-F8. It is presumed that the action of forming the electron conductive network densely, and the action of diffusing the electrolyte are effectively improved when the density of the negative electrode is 2.3 g/cm³ to 3.8 g/cm³, both inclusive.

### INDUSTRIAL APPLICABILITY

As described above, the mercury-free alkaline dry battery of the present invention is greatly improved in utilization ratio of the negative electrode, and is useful as batteries for devices which require long life batteries.

## Claims

1. A mercury-free alkaline dry battery comprising:
a positive electrode; a negative electrode; and a separator, wherein
the negative electrode contains short fibrous zinc particles as a negative electrode active material, and a gelled alkaline electrolyte as a dispersion medium, and
each of the short fibrous zinc particles has a length of 1 mm to 50 mm, both inclusive, a major diameter of a cross section of 2 µm to 1 mm, both inclusive, and a specific surface area of 50 cm²/g to 1000 cm²/g, both inclusive.

2. The mercury-free alkaline dry battery of claim 1, wherein
the negative electrode does not contain an adhesive for bonding the short fibrous zinc particles as the negative electrode active material.

3. The mercury-free alkaline dry battery of claim 2, wherein
the adhesive is polyvinyl alcohol.

4. The mercury-free alkaline dry battery of any one of claims 1 to 3, wherein
a major diameter and a minor diameter of the cross section has a relation of 0.1 ≤ minor diameter/major diameter ≤1.

5. The mercury-free alkaline dry battery of any one of claims 1 to 4, wherein
the short fibrous zinc particle has a grain size of 1 µm to 50 µm, both inclusive.

6. The mercury-free alkaline dry battery of any one of claims 1 to 5, wherein
the negative electrode further includes zinc particles having a maximum diameter of 500 µm or smaller as the negative electrode active material, and the content of the short fibrous zinc particles is 2% by mass to 80% by mass, both inclusive, relative to the total negative electrode active material.

7. The mercury-free alkaline dry battery of claim 6, wherein
the major diameter and the minor diameter of the cross section have a relation of 0.15 ≤ minor diameter/major diameter ≤ 1, and the maximum diameter of the zinc particles is 250 µm or smaller.

8. The mercury-free alkaline dry battery of any one of claims 1 to 7, wherein
the negative electrode has a density of 2.3 g/cm³ to 3.8 g/cm³, both inclusive.

9. The mercury-free alkaline dry battery of any one of claims 1 to 8, wherein
at least one substance selected from the group consisting of Al, Bi, In, Ca, and Mg is added to the short fibrous zinc particles.

10. The mercury-free alkaline dry battery of claim 6 or 7, wherein
at least one substance selected from the group consisting of Al, Bi, In, Ca, and Mg is added to the short fibrous zinc particles and the zinc particles.
